# EUROPÄISCHE PATENTSCHRIFT

(11) **EP 1 792 523 B1**
(45) Veröffentlichungstag und Bekanntmachung des Hinweises auf die Patenterteilung: **22.04.2015**
(21) Anmeldenummer: 05776738.6
(22) Anmeldetag: 03.08.2005
(51) Int. Cl.: H05B 41/04

(54) **ZÜNDGERÄT**
IGNITING DEVICE
DISPOSITIF D'ALLUMAGE

(30) Priorität: 22.09.2004 DE 102004045834
(43) Veröffentlichungstag der Anmeldung: 06.06.2007
(73) Patentinhaber: BAG electronics GmbH, 59759 Arnsberg (DE)
(72) Erfinder: MERTENS, Ferdinand, 59755 Arnsberg (DE); SCHAUERTE, Reinhard, 59872 Meschede (DE); SCHULTE, Tobias, 59872 Meschede (DE)
(74) Vertreter: Jungen, Rolf
(86) Internationale Anmeldenummer: PCT/DE2005/001364
(87) Internationale Veröffentlichungsnummer: WO 2006/032228

(56) Entgegenhaltungen:
- EP-A- 0 506 543
- DE-U1- 29 806 901
- US-B1- 6 323 603
- US-B1- 6 323 604

## Beschreibung

Die Erfindung betrifft eine Zündschaltungsanordnung zum Zünden einer Gasentladungslampe, insbesondere einer Hochdruckgasentladungslampe mit den Merkmalen des Oberbegriffs von Anspruch 1 sowie ein Verfahren zum Zünden einer solchen Lampe.

Insbesondere Hochdruckgasentladungslampen benötigen beim Starten eine Zündspannung, die weit über der Versorgungsspannung zur Aufrechterhaltung der Entladung liegt. Typischerweise weisen Zündspannungsimpulse beim Kaltstarten eine Zündspannung von etwa 1 kV bis 5 kV je nach verwendeter Lampe auf. Aufgrund des erhöhten Druckes bei erhöhter Temperatur sind für die Heißzündung von Hochdruckgasentladungslampen sehr viel höhere Zündspannungen notwendig, sie liegen etwa im Bereich von zehn bis sechzig kV je nach verwendetem zu ionisierenden Material und Leistung der Lampe.

Herkömmliche Hochspannungs-Zündgeräte für Hochdruckgasentladungslampen sind in der Regel als Überlagerungszündschaltung ausgelegt. Eine solche Zündschaltung ist beispielsweise in der deutschen Offenlegungsschrift DE 195 31 622 offenbart. Diese umfasst einen Impulstransformator, dessen Sekundärseite mit der zu zündenden Lampe und dessen Primärseite mit einer den Zündimpuls auslösenden Schaltung verbunden ist.

Um das sichere Zünden von Hochdruckgasentladungslampen zu gewährleisten, weisen die Zündimpulse in der Regel eine Breite von einer bis wenigen Mikrosekunden auf und werden über eine Anzahl von Netzhalbwellen wiederholt, was zu einer Wiederholungsfrequenz von etwa 100 Hz führt. In der Regel dauert der gesamte Zündvorgang im Bereich von Sekunden, sodass insbesondere der Zündtransformator eine große Induktivität aufweist, was einerseits den Platzbedarf einer solchen Zündschaltung negativ beeinflusst und andererseits zu akustischen Belastungen bei der Ummagnetisierung des Kerns führt. Die für die Zündung aufzuwendende hohe elektrische Energie ist mit einer hohen Verlustwärme verbunden. In der europäischen Patentanmeldung EP 0868115 A2 ist eine gattungsgemäße Zündschaltung offenbart. Diese soll sich unter Umständen auch für Heißzündungen eignen, bei der eine Zündspannung von bis über 20 kV benötigt wird.

Die Veröffentlichung DE 298 06 901 U1 zeigt eine Schaltung nach der Präambel von Anspruch 1.

Der Erfindung liegt die Aufgabe zugrunde, das Zünden von Gasentladungslampen bei gattungsgemäßen Zündschaltungen weiter zu verbessern, insbesondere beim Heißzünden der Lampe.

Diese Aufgabe löst die Erfindung auf überraschend einfache Weise schon mit einer Zündschaltungsanordnung mit den Merkmalen von Anspruch 1 beziehungsweise mit einem Verfahren zum Zünden einer Gasentladungslampe mit den Merkmalen von Anspruch 13.

Vorrichtungsseitig stellt die Erfindung eine Zündschaltungsanordnung zum Zünden einer Gasentladungslampe, insbesondere einer Hochdruckgasentladungslampe bereit, der eine Versorgungsschaltung zur Bereitstellung einer Wechselstrom-Versorgungsspannung an die Lampe zugeordnet ist. Die Zündschaltungsanordnung umfasst einen Zündübertrager, der primärseitig mit einer Auslöseschaltung und sekundärseitig zur Übertragung eines Zündimpulses mit der Lampe verbunden ist; eine Eingangsenergiequelle für die Zündauslöseschaltung; ein erstes Schaltermittel in der Auslöseschaltung und ein Steuermittel, welches das erste Schaltermittel ansteuert. Die erfindungsgemäße Zündschaltungsanordnung zeichnet sich dadurch aus, dass zum Bereitstellen einer zusätzlichen elektrischen Versorgung der Gasentladungslampe während des Zündvorganges zu dessen Unterstützung in Reihe zur Lampe ein durch das Steuermittel steuerbarer Energiespeicher, insbesondere eine durch das Steuermittel steuerbare Spannungsquelle angeordnet ist, wobei ein die Gasentladungslampe überbrückender, und ein durch das Steuermittel angesteuertes zweites Schaltermittel (60) umfassender Strompfad zum Laden des Energiespeichers vorgesehen ist.

Dabei dient der steuerbare Energiespeicher dazu, über die eigentliche Wechselstromversorgung der Lampe hinaus eine zusätzliche elektrische Versorgung während des Zündvorganges bereitzustellen. Durch diese überraschend einfache Maßnahme wird erreicht, dass die Entladung in der Lampe in der Regel schon beim ersten Zündversuch mit einer höheren Wahrscheinlichkeit erzeugt und aufrecht erhalten werden kann. Durch die erfindungsgemäße Gestaltung der Zündschaltungsanordnung kann darüber hinaus Energie eingespart werden, da die erfindungsgemäße Zündschaltungsanordnung in der Regel mit weniger Zündimpulsen als herkömmliche Zündschaltungsanordnungen auskommt. Gleiches gilt auch für das Heißzünden von Hochdruckgasentladungslampen, was bislang insbesondere bei Lampen mit hohen Leistungen ein großes Problem darstellte. Die erfindungsgemäße Gestaltung der Zündschaltungsanordnung hat zur Folge, dass die elektrischen Komponenten für die Zündschaltungsvorrichtung kleiner dimensioniert werden können, was sowohl den Platzbedarf als auch die Kosten stark vermindert. Hierdurch ergeben sich letztlich neue Einsatzmöglichkeiten von Hochdruckgasentladungslampen, beispielsweise im privaten Bereich.

Der Ladestrompfad kann dabei z.B. zur Gasentladungslampe mittelbar oder unmittelbar parallel geschaltet sein. Durch das Vorsehen des Ladestrompfades wird erreicht, dass der Energiespeicher zur Stützung des Zündvorganges je nach Anwendung ganz speziell zum jeweiligen Bedarf mit der erforderlichen Energie versehen werden kann, die vor dem Zünden der Lampe aus der Versorgungsschaltung entnehmbar ist. Zur Steuerung des Aufladevorganges kann ein elektronischer steuerbarer Schalter wie ein bipolarer oder ein Feldeffekt-Transistor vorgesehen sein, über welchen der Strompfad geschlossen beziehungsweise geöffnet werden kann. Über die Ladezeit kann dabei die im Energiespeicher zur Stützung des Zündvorganges abgelegte Energie festgelegt werden.

Der Erfindung liegt die Idee zugrunde, während der Erzeugung des Zündimpulses an der Lampe dafür zu sorgen, dass eine über die herkömmliche Wechselstromversorgung der Lampe hinausgehende elektrische Versorgung bereitgestellt wird, sodass das entstehende Plasma zusätzlich unterstützt wird, wodurch letztlich sich die Wahrscheinlichkeit erhöht, dass ein Zündversuch Erfolg hat. Diese Unterstützung des Plasmas hin zu einer stabilen Entladung hat darüber hinaus den Vorteil, dass bei der erfindungsgemäßen Zündschaltungsanordnung im Vergleich zu herkömmlichen Schaltungen mit geringeren Zündspannungen gearbeitet werden kann, sodass sich auch hierdurch häufig die Anforderungen an die elektronischen und elektrischen Komponenten vermindern.

Vorteilhaft kann das erste Schaltermittel innerhalb zumindest einer Versorgungsspannungshalbwelle nach dem Überschreiten eines vorgegebenen Momentanwertes der Versorgungsspannung durch das Steuermittel innerhalb eines Zeitintervalls zum Öffnen und Schließen angesteuert sein, wodurch zumindest ein Zündimpuls erzeugbar ist. Durch diese Maßnahme wird erreicht, dass die Zündung zu solchen Zeiten gestartet wird, bei welchen die Versorgungsspannung oberhalb der Brennspannung der Lampe liegt, die notwendig ist um die Entladung aufrecht zu erhalten.

Je nach Ausführungsform kann innerhalb des vorgegebenen Intervalls in einer Versorgungsspannungshalbwelle ein oder auch mehrere primärseitigen Impulse durch entsprechendes Ansteuern des ersten Schaltermittels erzeugt werden. Dabei ist es aus den oben genannten Gründen zu bevorzugen, so wenig Impulse wie möglich innerhalb der Versorgungsspannungshalbwelle zu erzeugen. Je nach verwendeter Lampe kann es jedoch auch vorteilhaft sein, mehrere solcher primärseitiger Impulse kurz hintereinander zu erzeugen um sicherzustellen, dass die Lampe zündet.

Grundsätzlich kann die erfindungsgemäße Zündschaltungsanordnung ohne einen parallel zur Lampe angeordneten Zündkondensator ausgebildet sein. Aufgrund der in Wirklichkeit parallel zur Lampe immer vorhandenen Streukapazität ergibt sich bei einem primärseitig erzeugten Auslöseimpuls sekundärseitig zum Zündübertrager in der Regel eine gedämpfte Schwingung. Deshalb kann es vorteilhaft sein, wenn sich die Ansteuerfrequenz für das erste Schaltermittel zur Erzeugung von Zündimpulsen innerhalb des Zeitintervalls in einer Versorgungsspannungshalbwelle verändert, wobei die Ansteuerfrequenz größer 290 kHz ist. Damit lässt sich die Anregung von die Zündung behindernde Plasmaschwingungen verhindern.

Als Schaltermittel eignen sich insbesondere elektronische Schalter, die Schaltzeiten von weniger als 1 µs aufweisen.

Grundsätzlich ist die erfindungsgemäße Zündschaltungsanordnung sowohl bei konventionellen Vorschaltgeräten (KVG) als auch bei elektronischen Vorschaltgeräten (EVG) einsetzbar. Die bei KVG's in der Versorgungsschaltung seriell zur Lampe zum Zwecke der Strombegrenzung angeordnete Drosselspule kann vorteilhaft in der erfindungsgemäßen Zündschaltungsanordnung als der genannte Energiespeicher verwendet werden, welcher vorgeladen und gesteuert zur Unterstützung der Zündung wirkt.

Um eine noch höhere Flexibilität bei dem Einstellen des Zündvorganges zur Verfügung zu stellen, kann vorgesehen sein, dass die Eingangsenergiequelle für die Zündauslöseschaltung, insbesondere eine der Zündauslöseschaltung zugeordnete Spannungsquelle durch das Steuermittel variabel einstellbar ist. Insofern ergibt sich damit zusätzlich die Möglichkeit, bei Bedarf die Höhe des Zündimpulses einzustellen und zwar sowohl beispielsweise einheitlich bei einer Folge von Zündimpulsen als auch unterschiedlich. Die Höhe der Zündspannung ist damit grundsätzlich auf die jeweilige zu startende Lampe und deren Betriebszustand einstellbar. Ferner erlaubt die erfindungsgemäße Zündschaltungsanordnung auch das Erzeugen von mehreren Zündimpulsen mit unterschiedlichen Spannungshöhen innerhalb eines einzelnen Zündvorganges. Dies kann unter Umständen dann sinnvoll sein, wenn nach dem Zünden des Plasmas mit einer hohen Zündspannung beispielsweise in einer nachfolgenden Versorgungsspannungshalbwelle ein oder mehrere Zündimpulse mit geringerer Zündspannung zur Stützung oder Vollausbildung des in der vorherigen Halbwelle gebildeten Plasmas erzeugt werden.

Es kann zweckmäßig sein, wenn ein Mittel zur Erfassung des Ladestroms und/oder der Ladespannung des Energiespeichers vorgesehen ist. Hierdurch ist insbesondere der Energiegehalt des den Zündvorgang unterstützenden Energiespeichers direkt ermittelbar, wodurch der Zündvorgang sehr genau steuerbar ist. Beispielsweise kann das zweite Schaltermittel, mit welchem der Strompfad zur Ladung des Energiespeichers geschlossen bzw. geöffnet wird, im Ansprechen, d.h. abhängig von dem Ladezustand des Energiespeichers gesteuert werden.

Es kann ferner zweckmäßig sein, wenn sich die Ansteuerfrequenz des ersten Schaltermittels innerhalb des Zeitintervalls ausgehend von einer vorgegebenen unteren Frequenz in Richtung zu höheren Frequenzen verändert. Diese Veränderung kann vorteilhaft bis zu einer vorgegebenen oberen Frequenz erfolgen, wobei die Änderung in Schritten als auch kontinuierlich durchgeführt werden kann. Besonders vorteilhafte Ansteuerfrequenzen für das erste Schaltermittel im Hinblick auf die Erzeugung eines gleichförmig gestalteten und stabilen Lichtbogens liegt zwischen 290 kHz und 700 kHz oder zwischen 800 kHz und 5 MHz.

Es ist zweckmäßig, wenn das Zeitintervall, innerhalb dessen der zumindest eine Zündimpuls erzeugt wird, durch den Zeitraum zwischen dem Zeitpunkt des Erreichens eines vorgegebenen Momentanwertes und dem Zeitpunkt des Erreichens eines vorgegebenen Grenzwertes der Versorgungsspannung festgelegt ist. Ein solcher Grenzwert kann beispielsweise die Scheitelspannung der Versorgungsspannung sein. Dabei liegt, wie obenstehend schon aufgeführt, der vorgegebene Wert über der für die Erhaltung der Bodenentladung notwendigen Brennspannung. Somit ist sichergestellt, dass die Lampe nur zu solchen Zeitpunkten gezündet wird, an welchen die Versorgungsspannung über der Brennspannung der Lampe liegt und die Versorgungsspannung steigt. Je nach Ausführung kann das Zeitintervall für die Zündimpulse innerhalb einer Versorgungsspannungshalbwelle um den Faktor 2 dadurch verlängert werden, dass auch der Zeitraum zwischen dem Erreichen der Scheitelspannung der Versorgungsspannung und der weitere Abfall der Spannung bis zum Erreichen des vorgegebenen Mindestwertes für den Zündvorgang genutzt wird.

Verfahrensseitig löst die Erfindung das obige Problem mit einem Verfahren zum Zünden einer Gasentladungslampe, die im Betrieb mittels einer Wechselstrom-Versorgungsschaltung mit elektrischer Energie versorgt wird mit den Merkmalen von Anspruch 13. Dabei wird mittels einer einen Zündübertrager aufweisenden Zündschaltungsanordnung zumindest ein Zündimpuls erzeugt. Das erfindungsgemäße Verfahren zeichnet sich dadurch aus, dass zur Unterstützung des Zündvorganges vor der Erzeugung des zumindest einen Zündimpulses ein in der Versorgungsschaltung in Reihe zur Gasentladungslampe angeordneter, steuerbarer Energiespeicher aufgeladen wird und die im steuerbaren Energiespeicher gespeicherte Energie beim Zündvorgang der Wechselstromversorgung der Lampe überlagert wird. Dabei ist vorgesehen, dass für das Laden des Energiespeichers vor der Erzeugung des zumindest einen Zündimpulses ein Ladestrompfad geschaltet wird, der vor der Erzeugung des ersten Zündimpulses, insbesondere nach Erreichen eines vorgegebenen und während des Ladevorganges erfassten Ladezustandes des Energiespeichers unterbrochen wird.

Das erfindungsgemäße Verfahren ermöglicht die Gestaltung von kleinen, integrierbaren Zündschaltungsanordnungen sowohl für die Kaltzündung als auch für die Heißzündung von Hochdruckgasentladungslampen.

Dabei kann es zweckmäßig sein, wenn innerhalb einer Halbwellenversorgungsspannung nur ein einzelner Zündimpuls erzeugt wird, sodass besonders wenig Energie zum Zünden der Lampen aufgewendet werden muss. Häufig reicht ein einzelnes Ein- und Ausschalten einer Auslöseschaltung wie z.B. eines IGBT (Insolated gate bipolar transistor) oder eines Feldeffekt-Transistors aus, um das Zünden der Lampe zu erreichen. Darüber hinaus kann es für den Aufbau und die Stabilität des Lichtbogens auch nützlich sein, wenn nach der Erzeugung des einen Zündimpulses innerhalb einer Halbwelle der Versorgungsspannung nachfolgend innerhalb der nachfolgenden Halbwelle wiederum beim Erreichen eines vorgegebenen Momentanwertes der Versorgungsspannung zumindest ein weiterer Zündimpuls erzeugt wird. Unter Umständen kann es auch vorteilhaft sein, jeweils einen Impuls innerhalb mehrerer, beispielsweise hier aufeinanderfolgende Halbwellen der Versorgungsspannung zu erzeugen um ein sicheres Zünden der Lampe zu erreichen.

Der Zündvorgang kann ferner durch Variieren der Spannung aufeinanderfolgender Zündimpulse eingestellt werden.

Insbesondere in solchen Fällen, bei denen der Energiespeicher durch eine Spule wie eine Drosselspule in einem KVG-Zündgerät bereitgestellt wird, kann es vorteilhaft sein, wenn nach Beendigung der Ladung des Energiespeichers und vor der Erzeugung des zumindest einen Zündimpulses durch Öffnen des Ladestrompfades eine parallel zur Lampe angeordnete Kapazität aufgeladen wird. Auf diese Weise kann erreicht werden, dass ein Großteil der vor dem Zündvorgang in der Spule gespeicherte Energie in einen Kondensator übergeführt wird, welcher zusätzlich zum an die Lampe angelegten Wechselstrom zur Versorgung der Lampe während des Zündvorganges dient.

Die Erfindung wird im Folgenden durch die Beschreibung einiger Ausführungsformen der erfindungsgemäßen Zündschaltungsanordnung unter Zugrundelegen der beiliegenden Figuren beschrieben, wobei
- Fig. 1: in einer Prinzipskizze eine erfindungsgemäß gestaltete Zündschaltungsanordnung in einer ersten Ausführungsform,
- Fig. 2: in einer Detailansicht die Gestaltung des ersten Schalters 40 der in Fig. 1 dargestellten Zündschaltungsanordnung,
- Fig. 3: den zeitlichen Verlauf eines Zündvorganges für die in Fig. 1 dargestellte Schaltung,
- Fig. 4: eine erfindungsgemäß gestaltete Zündschaltungsanordnung gemäß einer zweiten Ausführungsform,
- Fig. 5: in einer Detailansicht die Gestaltung des ersten Schalters 40 der in Fig. 4 dargestellten Zündschaltungsanordnung,
- Fig. 6: den zeitlichen Verlauf eines Zündvorganges für die in Fig. 4 dargestellten Schaltung
zeigt.

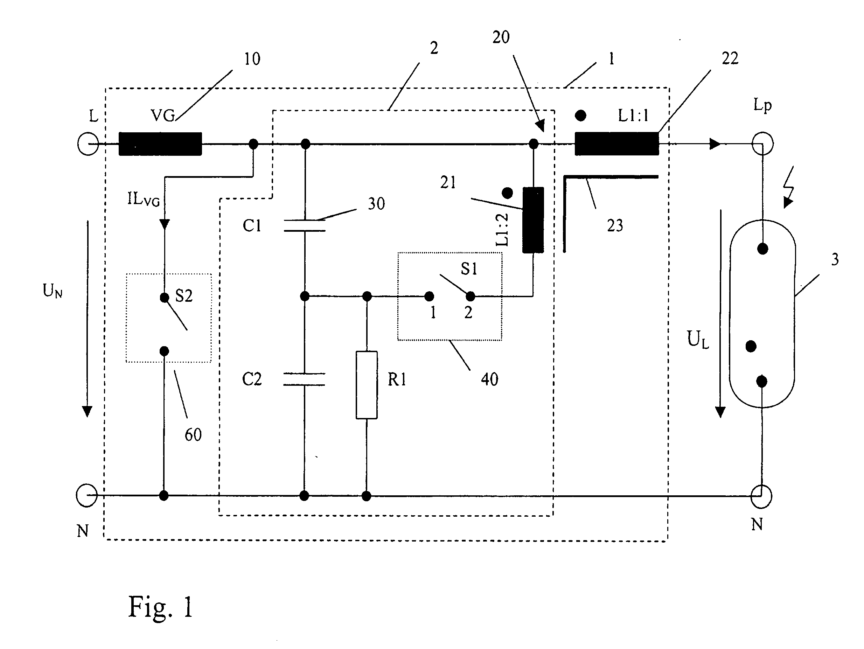

Fig. 1 zeigt eine erfindungsgemäße Zündschaltungsanordnung 1 zusammen mit der zu zündenden Hochdruckgasentladungslampe 3. An den Eingangsklemmen L, N liegt die Netzspannung U_{N} an. Die Lampe 3 wird über eine Lampendrossel 10 eines herkömmlichen KVG's und die sekundärseitige Spulenwicklung 22 eines Zündübertragers 20 mit elektrischer Energie versorgt. Die Zündauslöseschaltung 2 umfasst als wesentliche Bauelemente einen Stoßkondensator 30, welcher über die Parallelschaltung eines Kondensators C2 und eines Widerstandes R1 aufladbar ist sowie eine primärseitige Spulenwicklung 21 des Zündübertragers 20. Die primärseitige Spulenwicklung 21 ist über den Zündübertragerkern 23 an die sekundärseitige Spulenwicklung 22 gekoppelt, welche zur Übertragung und Transformation des Zündimpulses mit der Lampe 3 in Reihe geschaltet ist. Zum Auslösen des Zündimpulses ist in der Auslöseschaltung 2 ein erstes Schaltermittel mit zugeordneter Steuerung mit dem Bezugszeichen 40 angegeben. Darüber hinaus weist die erfindungsgemäße Zündschaltungsanordnung einen die Lampe 3 überbrückenden Strompfad auf, mit dem unabhängig von der Lampe und der Auslöseschaltung die Drossel 10 durch Betätigung eines weiteren Schaltermittels mit der Netzspannung U_{N} aufladbar ist. In der Fig. 1 ist das weitere Schaltermittel zusammen mit der Steuerung mit dem Bezugszeichen 60 angegeben.

Wie der Fachmann erkennt, ist die in Fig. 1 dargestellte Zündschaltungsanordnung als Überlagerungszündvorrichtung ausgebildet, durch welche die erzeugten Zündspannungen der elektrischen Versorgung der Lampe 3 überlagert werden. In der Figur ist der Lampenstrom mit I_{L} und die über die Lampe abfallende Spannung mit U_{L} bezeichnet. Der Ladestrom der Lampendrossel 10 ist mit IL_{VG} angegeben.

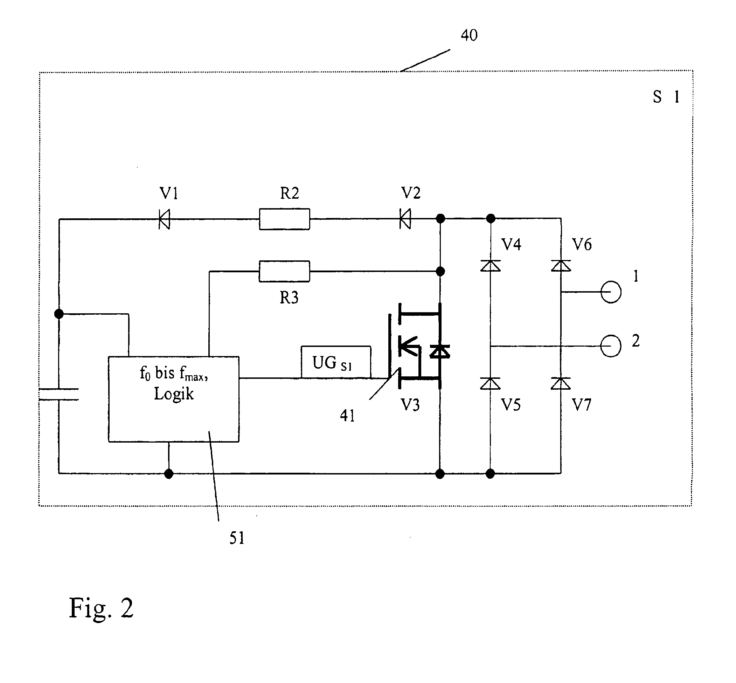

Fig. 2 zeigt in einer Detailansicht das Schaltermittel 40 (Schalter S1). Wesentliches Element ist ein Feldeffekttransistor 41, dessen Gatespannung UDS1 durch eine Steuerung 51 bereitgestellt ist. Diese Steuerung ist in der Lage, den Transistor je nach Programmierung zum einmaligen Öffnen und Schließen zur Erzeugung eines einzelnen primärseitigen Impulses und auch zum Ansteuern des Transistors zur Erzeugung von mehreren Impulsen mit einer oder mehreren Frequenzen über ein vorbestimmtes Zeitintervall anzusteuern. Die vier jeweils paarweise dem Transistor parallel geschalteten Dioden V4 bis V7 ermöglichen die Funktionsweise des Schalters sowohl bei positiver als auch bei negativer Halbwelle des Versorgungsnetzes.

Die Funktionsweise der in Fig. 1 dargestellten erfindungsgemäßen Zündschaltungsanordnung soll im Folgenden beschrieben werden. Vor dem ersten Zündversuch wird die Lampendrossel 10 über einen vorgegebenen Zeitraum und damit mit einer vorgegebenen elektrischen Energie aufgeladen, indem der Schalter S2 im zweiten Schaltermittel 60 mit zugeordneter Steuerung zum Schließen des Ladestrompfades angesteuert wird. Dabei fließt der Ladestrom IL_{VG} in die Lampendrossel. Der Schalter S2 ist ähnlich dem in Fig. 2 dargestellten Schalter S1 aufgebaut, allein die Steuerung unterscheidet sich, da der zusätzliche Energiespeicher in Form der Drossel in der beschriebenen Ausführungsform nur einmal zu Beginn des Zündvorganges aufgeladen wird. Nach dem Erreichen der vorgegebenen Energiemenge in der Drossel 10 wird der Schalter S2 wieder geöffnet. Insofern kann nachfolgend der Stoßkondensator C1 über das Netz und die vorher in der Drossel 10 gespeicherte Energie aufgeladen werden. Zu einem Zeitpunkt, bei welchem die Netzspannung oberhalb der Lampenbrennspannung liegt, wird der Schalter S1 zum einmaligen Öffnen und Schließen über einen Zeitraum von etwa einer µsec an- und wieder ausgeschaltet. Hierdurch entlädt sich der als Eingangsenergiequelle für die Auslöseschaltung dienende Stoßkondensator 30 über die primärseitige Spulenwicklung 21 des Zündübertragers 20. Die Magnetisierung der primärseitigen Spulenwicklung wird über den Zündübertragerkern 23 auf die sekundärseitige Spulenwicklung 22 mit dem Übertragungsverhältnis des Zündübertragers transformiert und der Netzspannung überlagert. Ein sekundärseitiger Zündimpuls liegt somit an der Lampe 3 an, sodass diese zünden kann. Zündet diese nicht sofort, so ergibt sich auf der Versorgungsleitung aufgrund der immer vorhandenen parallel zur Lampe 3 angeordneten Streukapazität eine abklingende Schwingung, wobei der Schwingkreis über die Kondensatoren C1 und C2 geschlossen wird, sodass die Lampendrossel 10 nicht mit der Zündspannung belastet wird.

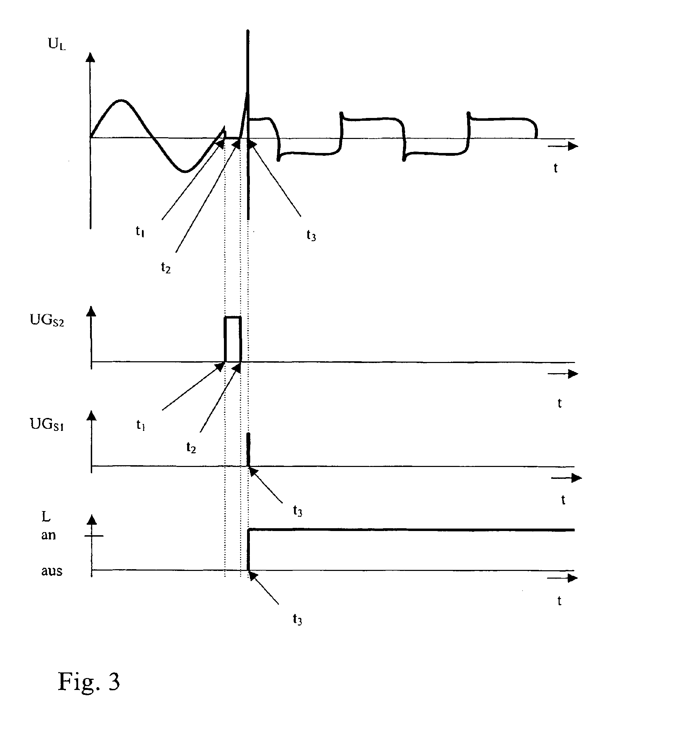

Der zeitliche Verlauf der Zündung ist in Fig. 3 dargestellt. Dabei bezeichnet UL die Lampenspannung, UGS1 die Gatespannung des Feldeffekttransistors V3, UGS2 die Gatespannung des Feldeffekttransistors des zweiten Schalters S2 und L zeigt an, ob die Hochdruckgasentladungslampe brennt oder nicht. Wie aus den Figuren ersichtlich, brennt anfangs die Lampe nicht, d.h. UL entspricht dem Verlauf der Netzspannung UN. Zum Zeitpunkt T1 wird der Schalter S2 geschlossen, sodass die Drossel 10 aufgeladen werden kann, insofern bricht die Lampenspannung UL bei T1 zusammen. Zum Zeitpunkt T2 wird der Schalter S2 wieder geöffnet, die Lampenspannung steigt wieder an. Wenn die Lampenspannung größer als die Brennspannung der Lampe ist, wird zum Zeitpunkt T3 der Schalter S1 in der Auslöseschaltung geschlossen, sodass ein auf der Versorgerseite erzeugter Zündimpuls der Versorgungsspannung überlagert wird. Im Zeitraum zwischen T3 und T2 wird die vorher in der Drossel 10 gespeicherte Energie an den Kondensator C1 zumindest teilweise abgegeben, sodass diese nun zur Erzeugung des Zündimpulses und für die Versorgung zusätzlich zur Verfügung steht und letztlich mit hoher Wahrscheinlichkeit schon beim ersten Zündimpulse die Lampe brennt, siehe das letzte Zeitdiagramm L in Fig. 3. Nach dem Zünden der Lampe ergibt sich die charakteristische Rechteckform für die Lampenbrennspannung.

Typische Schaltzeiten beziehungsweise Dauern bei der erfindungsgemäßen Zündschaltungsanordnung sind etwa einige zehn bis tausend Mikrosekunden für die Ladezeit der Drossel 10, einige bis einige zehn Mikrosekunden für die Ladung des Kondensators C1 über die Netzversorgung und die Drossel 10 sowie etwa eine Mikrosekunde für die Schaltdauer des Transistors in der Auslöseschaltung. In der in Fig. 1 dargestellten Ausführungsform beträgt die Induktivität der Lampendrossel 10 etwa 0,5 H, die Kapazität der Kondensatoren C1 bzw. C2 etwa 220 nF bzw. 100nF sowie die Induktivität L1 bzw. L2 des Zündübertragers etwa 10 µH bzw. 1 mH. Aufgrund der schon oben erwähnten Streukapazitäten wird durch den einzelnen primärseitigen Impuls versorgungsseitig eine gedämpfte Zündimpulsschwingung erzeugt. Dies ist in Fig. 3 in der Darstellung von UL ersichtlich, wo nach dem Entstehen eines positiven Impulses ein negativer Zündpuls dargestellt ist. Nach dem Anstoßen der Entladung wird diese gedämpfte Schwingung abrupt beendet, was sich an dem nachfolgenden charakteristischen, rechteckförmigen Brennspannungsverlauf zeigt.

Die in Fig. 1 dargestellte Zündschaltungsanordnung ist sowohl zum Kaltzünden als auch zum Heißzünden von Hochdruckgasentladungslampen geeignet. Insbesondere bei besonders schwer heiß zündbaren Lampen kann die Steuerlogik 51 nach dem Laden der Drossel 10 zur mehrmaligen Erzeugung von Zündimpulsen innerhalb einer einzelnen Versorgungsspannungshalbwelle oder auch in mehreren aufeinanderfolgenden Versorgungsspannungshalbwellen angesteuert werden. Darüber hinaus ist es zur Unterstützung des Zündprozesses auch möglich, den Schalter in der Auslöseschaltung in seiner Frequenz zu verändern um möglichst optimale Zündbedingungen zu erreichen. Beispielsweise kann die Ansteuerfrequenz für den Schalter S1 zwischen 290 kHz und 700 kHz oder zwischen 800 kHz und 5 MHz liegen. In diesem Fall werden im Unterschied zu der bisher beschriebenen Ausführungsform eine Vielzahl von Zündimpulsen bis zum Erreichen der Entladung erzeugt, was natürlich mit einem erhöhten Energieaufwand verbunden ist. In diesem Fall sind die elektronischen Komponenten entsprechend auszulegen.

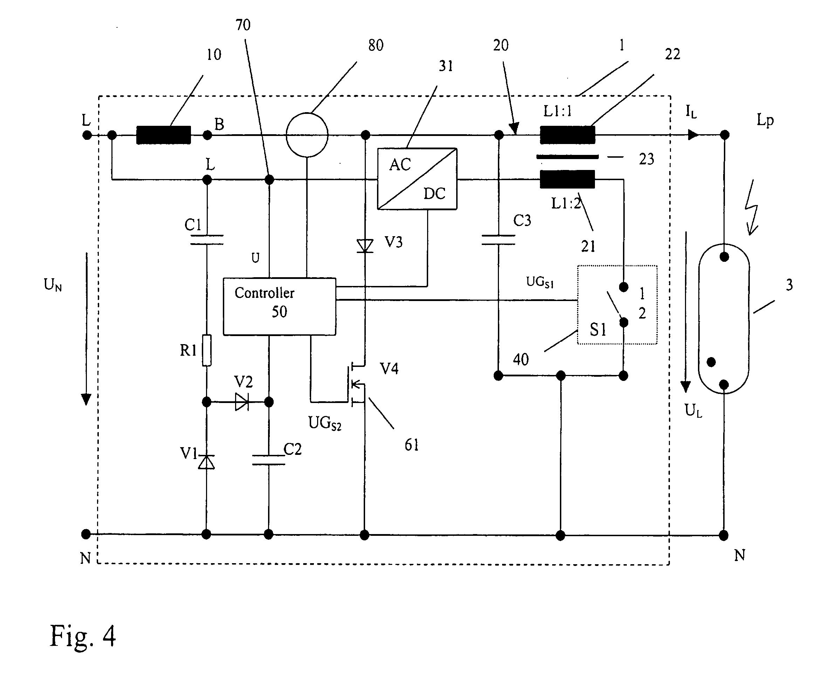

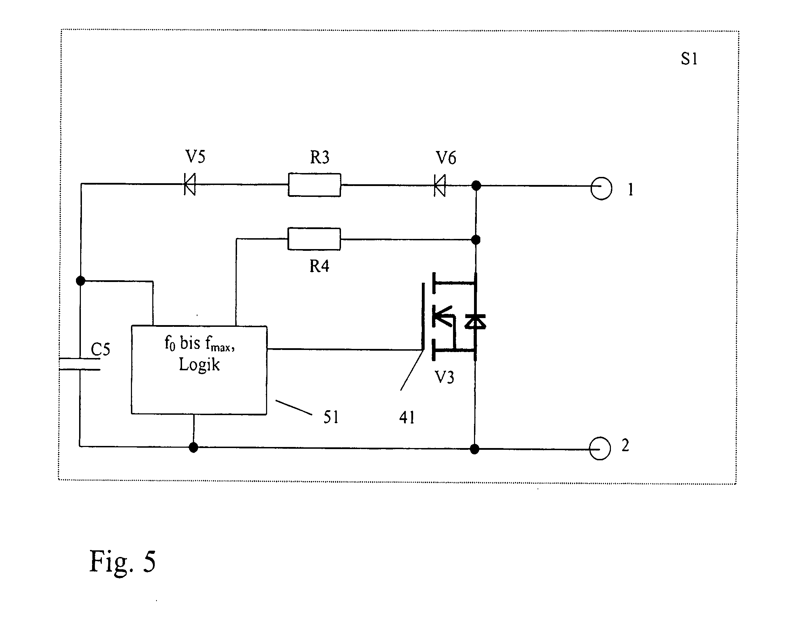

Fig. 4 zeigt eine weitere Ausführungsform einer erfindungsgemäßen Zündschaltungsanordnung. Funktionsgemäß gleiche oder ähnliche Bauelemente sind mit den gleichen Bezugsziffern wie in Fig. 1 versehen. Auch bei dieser Zündschaltungsanordnung wird die Auslöseschaltung über einen Zündübertrager 20, welcher eine primärseitige Wicklung 21 und eine sekundärseitige Wicklung 22 aufweist, mit der Lampe gekoppelt. Die Spannungsversorgung des Auslöseschaltkreises wird durch einen steuerbaren Gleichrichter 31 bereitgestellt. Alle wesentlichen Steuermittel sind in einem einzelnen Controller 50 zusammengefasst, welcher den Schalter S1 in der Auslöseschaltung und den Feldeffekttransistor 61 im Ladestrompfad für die Lampendrossel 10 über deren Gate-Leitungen ansteuert. Über Messvorrichtungen 80, 70 wird der Versorgungsstrom und der Momentanwert der Netzspannung erfasst und dem Controller 50 zugeführt. Insofern ist beispielsweise während der Ladung der Drossel 10 deren Ladezustand messbar, sodass mit hoher Genauigkeit die für die Zündung zusätzlich bereitgestellte Energie eingestellt werden kann. Die Bauteile C1, R1, V1, V2 und C2 dienen der Versorgung des Controllers. Im Unterschied zu der in Fig. 1 dargestellten Ausführungsform ist der Schalter S1 einpolar ausgebildet, siehe Fig. 5, da die Eingangsspannung der Auslöseschalter durch den gesteuerten Gleichrichter 31 bereitgestellt wird. Die Parallelschaltung des Kondensators C3 zur Lampe 3 dient wiederum als Hochfrequenz-Rückschlusskondensatoreinrichtung um die Drossel 10 nicht mit dem Hochspannungsimpuls zu belasten. Darüber hinaus wird vor der Zündung und nach der Ladung des Energiespeichers 10 ein Teil der dort gespeicherten Energie in den Kondensator C3 umgeladen, wobei diese zusätzliche Energie erfindungsgemäß zur Unterstützung des Aufbaus der Entladung in der Lampe 3 während des Zündvorganges dient.

Wie aus Fig. 4 hervorgeht, wird die Versorgungsspannung für den gesteuerten Gleichrichter 31 und die Steuerung 50 an dem Anschluss der Drossel 10 abgegriffen, welcher der Lampe abgewandt ist. In einer nicht dargestellten weiteren Ausführungsform der Erfindung werden diese Versorgungsspannungen an dem anderen Anschluss der Drossel abgegriffen, d.h. dem Anschluss, welcher der Lampe zugewandt und in Figur 4 mit dem Buchstaben "B" gekennzeichnet ist. Hierdurch kann die Anzahl der notwendigen Anschlusskabel vermindert werden.

Die in Fig. 4 dargestellte Zündschaltungsanordnung arbeitet im wesentlichen wie die in Fig. 1 gezeigte. Ein Unterschied besteht darin, dass durch den Controller 50 die Energieversorgungsspannung für die Auslöseschaltung gesteuert und insofern die Höhe des Zündimpulses sehr genau einstellbar ist. Durch das Schließen des Schalters S1 fließt ein Strom vom Gleichrichter 31 über die Primärwicklung 21 des Zündübertragers 20 und den geschlossenen Schalter S1 nach Masse, wodurch über die Sekundärwicklung 22 in der Versorgungsleitung ein Zündimpuls in ähnlicher Weise wie obenstehend beschrieben erzeugt wird.

Wie in der ersten Ausführungsform kann der Schalter S1 zur Erzeugung eines einzelnen primärseitigen Impulses, jedoch auch zur Erzeugung einer Pulsfolge mit vorgegebener und/oder variierender Frequenz verwendet werden. Darüber hinaus kann über den Controller 50 durch Einstellen der Ladezeit zum gesteuerten Laden der Drossel 10 abhängig von der Dimensionierung der Drossel und des Kondensators C3 die Energie festgelegt werden, welche zusätzlich beim Zündvorgang für die Entladung bereitsteht. Insofern sind die verschiedenen Zündparameter in Abhängigkeit von der angeschlossenen Lampe sehr genau einstellbar, was wiederum ein sicheres Zünden der Lampe mit geringstmöglichem Energie- und damit Schaltungsaufwand ermöglicht, unabhängig davon, ob die Lampe kalt oder heiß zu zünden ist. In einer nicht dargestellten Ausführungsform erkennt die Steuerung, wenn eine Heißzündung notwendig ist und stellt daraufhin die Zündparameter wie die Schaltzeiten der beiden Schalter, die Anzahl der primärseitigen Pulse und beispielsweise die Höhe der Eingangsspannung der Auslöseschaltung ein.

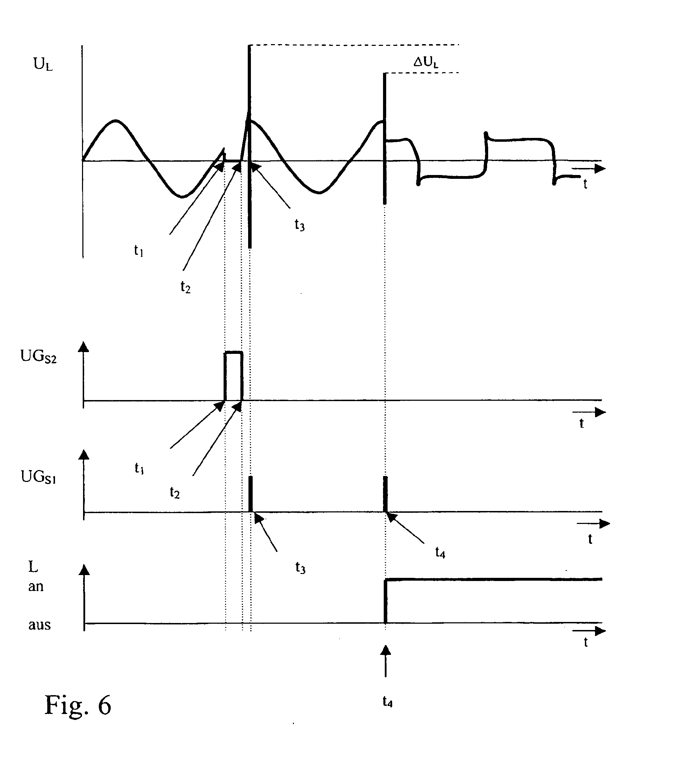

Fig. 6 zeigt den Zeitverlauf des Zündvorganges bei der in Fig. 4 dargestellten erfindungsgemäßen Zündschaltungsanordnung. Wiederum sind die zeitlichen Verläufe der Lampenspannung UL, der Gate-Ansteuerspannungen UGS1, UGS2 und der Zustand der Lampe L angegeben. Auch in dem dargestellten Beispiel wird nach dem Laden des Speichers 10 innerhalb des Zeitraums (T2 -T1) und dem nachfolgenden Aufbau der Netzspannung an der Lampe beziehungsweise der Entladung des zusätzlichen Energiespeichers 10 in den Kondensator C3 innerhalb der Netzspannungshalbwelle ein einzelner primärseitiger Impuls zum Zeitpunkt T3 erzeugt. Die Schaltungsanordnung reagiert wie obenstehend beschrieben sekundärseitig auf der Versorgungsleitung mit der Erzeugung einer gedämpften Zündimpulsschwingung. In dem in Fig. 6 gezeigten Verlauf brennt die Lampe jedoch nach dem ersten Zündimpuls noch nicht, was sich in dem nachfolgenden sinusförmigen Verlauf der Lampenspannung zeigt. Durch den ersten Zündpuls wurde zwar noch keine vollständige Entladung, jedoch eine Teilionisierung des Gases erreicht. Im dargestellten Beispiel wird die Entladung erst mit einem nachfolgenden Zündpuls durch entsprechendes Ansteuern des Schalters S1 zum Zeitpunkt T4 erzeugt. Wie aus dem Zustandsverlauf der Lampe L und der Lampenspannung U_{L} ersichtlich, startet die Entladung nach dem zweiten primärseitigen Puls, der als Zündpuls sekundärseitig der Versorgungsspannung überlagert wird. Aus der Darstellung von U_{L} geht hervor, dass der zweite Zündpuls zum Zeitpunkt T4 kleiner als der erste ist. Dies wird dadurch erreicht, dass der Controller 50 den steuerbaren Gleichrichter 31 für den zweiten Impuls in der zweiten Versorgungsspannungshalbwelle zur Ausgabe einer im Vergleich zum ersten Impuls kleineren Eingangsspannung für die Auslöseschaltung ansteuert, sodass sich die beiden sekundärseitigen Spannungsimpulse wie in Fig. 6 gezeigt, um den Betrag ΔU_{L} unterscheiden. Beispielsweise kann zum Kaltstarten einer Hochdruckgasentladungslampe die Schaltung zur Erzeugung eines sekundärseitigen Zündimpulses von tausend Volt zum Zeitpunkt T3 und eines Zündimpulses von 700 Volt zum Zeitpunkt T4 ausreichen, da bekannt ist, dass die angeschlossene Lampe unter den angegebenen Bedingungen noch zündet. Auf diese Weise können die elektronischen Komponenten beziehungsweise die Lampe geschont werden, was deren Standzeit erhöht.

Der Fachmann erkennt, dass bei der in Fig. 4 dargestellten erfindungsgemäßen Zündschaltungsanordnung die Auslöseschaltung auch zu der Erzeugung einer Mehrzahl von Zündimpulsen fester oder veränderlicher Frequenz verwendet werden kann. Darüber hinaus sei darauf hingewiesen, dass die in Fig. 4 dargestellte Zündschaltungsanordnung eingerichtet ist, Zündimpulse innerhalb einer positiven Halbwelle der Versorgungsspannung zu erzeugen. Sollen demnach in nacheinanderfolgenden Halbwellen Zündpulse erzeugt werden, liegt bei der in Fig. 4 dargestellten Ausführungsform zwischen Halbwellen mit erzeugten Impulsen immer eine negative Halbwelle, bei welcher keine Zündpulse erzeugt werden können. Dem Fachmann sind jedoch ohne weiteres Gestaltungsmöglichkeiten bekannt, mit welchen dieser Nachteil umgangen werden kann. Beispielsweise ist es mit der in Fig. 1 dargestellten Ausführungsform durch den bipolaren Charakter der Auslöseschaltung möglich, Zündpulse in aufeinanderfolgenden und benachbarten Halbwellen der Versorgungsspannung zu erzeugen.

### Bezugszeichenliste

- 1: Zündschaltungsanordnung
- 2: Auslöseschaltung
- 3: Hochdruckgasentladungslampe
- 10: Energiespeicher, Lampendrossel
- 20: Zündübertrager
- 21: Primärseitige Spulenwicklung/Spule
- 22: Sekundärseitige Spulenwicklung/Spule
- 23: Zündübertragerkern
- 30: Stoßkondensator
- 31: Steuerbarer Gleichrichter
- 40: Erstes Schaltmittel mit Steuerung
- 41: FET
- 50: Steuermittel, Controller
- 51: Steuerung für Schalter S1
- 60: Zweites Schaltermittel mit Steuerung
- 61: Feldeffekttransistor (FET)
- 70: Erfassungsmittel für Momentanwert der Netzspannung
- 80: Erfassungsmittel für Ladestrom/Lampenstrom
- I_{L}: Lampenstrom
- I_{L}VG: Ladestrom des Vorschaltgeräts (VG)
- UG_{S1}: Gate-Ansteuerung des Schalters S1
- UG_{S2}: Gate-Ansteuerung des Schalters S2
- U_{N}: Netzspannung
- U_{L}: Brennspannung
- S1, S2: Schalter
- (T2 -T1): Ladezeit
- T3: Erster Zündpulszeitpunkt
- T4: Zweiter Zündpulszeitpunkt

## Patentansprüche

1. Zündschaltungsanordnung (1) zum Zünden einer Gasentladungslampe, insbesondere eine Hochdruckgasentladungslampe (3), der eine Versorgungsschaltung zur Bereitstellung einer Wechselstrom-Versorgungsspannung (U_{N}) an die Lampe zugeordnet ist, umfassend
- einen Zündübertrager (20), welcher primärseitig mit einer Auslöseschaltung (2) und sekundärseitig zur Übertragung eines Zündimpulses mit der Lampe (3) verbunden ist;
- eine Eingangsenergiequelle (30, 31) für die Zündauslöseschaltung;
- ein erstes Schaltermittel (40) in der Auslöseschaltung und;
- ein Steuermittel (50), welches das erste Schaltermittel (40) ansteuert, **dadurch gekennzeichnet**, d a s s zum Bereitstellen einer zusätzlichen elektrischen Versorgung der Gasentladungslampe (3) während des Zündvorganges zu dessen Unterstützung in Reihe zur Gasentladungslampe (3) ein durch das Steuermittel (50) steuerbarer Energiespeicher (10), insbesondere eine durch das Steuermittel steuerbare Spannungsquelle angeordnet ist, wobei ein die Gasentladungslampe überbrückender, und ein durch das Steuermittel angesteuertes zweites Schaltermittel (60) umfassender Strompfad zum Laden des Energiespeichers vorgesehen ist.

2. Zündschaltungsanordnung nach Anspruch 1, **gekenn**- **zeichnet** durch ein Mittel (70) zum Erfassen des Momentanwertes der Versorgungsspannung, wobei das erste Schaltermittel innerhalb zumindest einer Versorgungsspannungshalbwelle nach dem Überschreiten eines vorgegebenen Momentanwertes der Versorgungsspannung durch das Steuermittel innerhalb eines Zeitintervalls zum Öffnen und Schließen angesteuert ist.

3. Zündschaltungsanordnung nach Anspruch 2, **dadurch gekennzeichnet, dass** sich die Ansteuerfrequenz für das erste Schaltermittel innerhalb des Zeitintervalls verändert, wobei die Ansteuerfrequenz größer 290 KHz ist.

4. Zündschaltungsanordnung nach einem der Ansprüche 1 bis 3**, dadurch gekennzeichnet, dass** der Energiespeicher durch eine Drosselspule (10) in der Versorgungsschaltung gebildet ist.

5. Zündschaltungsanordnung nach einem der Ansprüche 1 bis 4**, dadurch gekennzeichnet, dass** die Eingangsenergiequelle (30) für die Zündauslöseschaltung als Spannungsquelle ausgebildet ist und durch das Steuermittel (50) variabel einstellbar ist.

6. Zündschaltungsanordnung nach einem der Ansprüche 1 bis 5, **gekennzeichnet durch** Mittel (80) zur Erfassung des Ladestroms und/oder der Ladespannung des Energiespeichers.

7. Zündschaltungsanordnung nach einem der Ansprüche 3 bis 6**, dadurch gekennzeichnet, dass** sich die Ansteuerfrequenz des ersten Schaltermittels (41) innerhalb des Zeitintervall ausgehend von einer vorgegebenen unteren Frequenz in Richtung zu höheren Frequenzen verändert.

8. Zündschaltungsanordnung nach Anspruch 7, **dadurch gekennzeichnet, dass** sich die Ansteuerfrequenz des ersten Schaltermittels (41) innerhalb des Zeitintervalls bis zu einer vorgegebenen oberen Frequenz erhöht.

9. Zündschaltungsanordnung nach einem der Ansprüche 3 bis 8**, dadurch gekennzeichnet, dass** sich die Ansteuerfrequenz des ersten Schaltermittels innerhalb des Zeitintervalls kontinuierlich verändert.

10. Zündschaltungsanordnung nach einem der Ansprüche 1 bis 9**, dadurch gekennzeichnet, dass** das Zeitintervall durch den Zeitraum zwischen dem Zeitpunkt des Erreichens des vorgegebenen Wertes und dem Zeitpunkt des Erreichens eines vorgegebenen Grenzwertes, insbesondere der Scheitelspannung der Versorgungsspannung festgelegt ist.

11. Zündschaltungsanordnung nach einem der Ansprüche 1 bis 10**, dadurch gekennzeichnet, dass** die Ansteuerfrequenz des ersten Schaltermittels (40, 41) zwischen 290 kHz und 700 KHz oder zwischen 800 kHz und 5 MHz liegt.

12. Verfahren zum Zünden einer Gasentladungslampe, insbesondere einer Hochdruckgasentladungslampe die im Betrieb mittels einer Wechselstrom-Versorgungsschaltung mit elektrischer Energie versorgt wird, wobei mittels einer einen Zündübertrager (20) aufweisende Zündschaltungsanordnung (1) zumindest ein Zündimpuls erzeugt wird, **dadurch gekennzeichnet, dass** zur Unterstützung des Zündvorganges vor der Erzeugung des zumindest einen Zündimpulses ein in der Versorgungsschaltung in Reihe zur Gasentladungslampe (3) angeordneter, steuerbarer Energiespeicher (10) durch Schalten eines Ladestrompfades aufgeladen wird, wobei der Ladestrompfad vor der Erzeugung des ersten Zündimpulses unterbrochen und zumindest ein Teil der im steuerbaren Energiespeicher gespeicherten Energie beim Zündvorgang der Wechselstromversorgung der Lampe überlagert wird.

13. Verfahren nach Anspruch 12, **dadurch gekennzeichnet, dass** innerhalb einer Halbwelle der Versorgungsspannung ein einzelner Zündpuls erzeugt wird.

14. Verfahren nach Anspruch 12 oder 13, **dadurch gekennzeichnet, dass** nach der Erzeugung zumindest eines Zündimpulses innerhalb einer Halbwelle der Versorgungsspannung innerhalb einer nachfolgenden Halbwelle beim Erreichen eines vorgegebenen Momentanwertes der Versorgungsspannung zumindest ein weiterer Zündimpuls erzeugt wird.

15. Verfahren nach Anspruch 14, **dadurch gekennzeichnet, dass** die Eingangsspannung einer Auslöseschaltung (2) für die Erzeugung des zumindest einen Zündimpulses in der nachfolgenden Halbwelle im Vergleich zur Eingangsspannung für die Erzeugung des zumindest einen Zündimpulses in der vorherigen Halbwelle kleiner eingestellt wird.

16. Verfahren nach Anspruch 15, **dadurch gekennzeichnet, dass** nach Beendigung der Ladung des Energiespeichers und vor der Erzeugung des zumindest einen Zündimpulses durch Öffnen des Ladestrompfades eine parallel zur Lampe angeordnete Kapazität (C1; C3) aufgeladen wird.

17. Verfahren nach einem der Ansprüche 12 bis 16, **dadurch gekennzeichnet, dass** der Ladestrom und/oder die Momentanspannung des Energiespeichers (10) erfasst wird.

18. Verfahren nach Anspruch 17, **dadurch gekennzeichnet, dass** die Eingangsspannung einer Zündauslöseschaltung (2) für die Erzeugung des zumindest einen Zündimpulses im Ansprechen auf die Erfassung des Ladestromes und/oder auf die Erfassung der Momentanspannung des Energiespeichers (10) gesteuert wird.

## Claims

1. Ignition circuit arrangement (1) for igniting a gas discharge lamp, particularly a high-pressure gas discharge lamp (3), associated with a supply circuit for providing an alternating current supply voltage (U_{N}) for said lamp, comprising
- an ignition transformer (20) connected on its primary side to a trigger circuit (2) and on its secondary side to said lamp (3), for transmitting an ignition pulse;
- an input energy source (30, 31) for said ignition trigger circuit (2);
- a first switch means (40) in said trigger circuit (2); and
- a control means (50) that controls said first switch means (40),
**characterized in that** for providing for an additional electrical supply of said gas discharge lamp (3) during the ignition process and for aiding said ignition process, there is arranged in series with the gas discharge lamp (3) an energy storage (10) controllable by said control means (50), particularly a voltage source controllable by said control means, wherein a current path for charging the energy storage is provided which shunts out said gas discharge lamp and which comprises a second switch means (60) controlled by said control means.

2. Ignition circuit arrangement according to claim 1, **characterized by** a means (70) for detecting the momentary value of the supply voltage, wherein the first switch means is controlled by said control means within a time interval for opening and closing within at least a supply voltage half cycle after exceeding a predetermined momentary value of the supply voltage.

3. Ignition circuit arrangement according to claim 2, **characterized in that** the control frequency for the first switch means changes within said time interval, said control frequency being greater than 290 KHz.

4. Ignition circuit arrangement according to one of the claims 1 to 3, **characterized in that** said energy storage is formed by an inductor (10) in said supply circuit.

5. Ignition circuit arrangement according to one of the claims 1 to 4, **characterized in that** the input energy source (30) for the ignition trigger circuit is configured as a voltage source and is adjustable in a variable manner by said control means (50).

6. Ignition circuit arrangement according to one of the claims 1 to 5, **characterized by** means (80) for detecting the charging current and/or the charging voltage of the energy storage.

7. Ignition circuit arrangement according to one of the claims 3 to 6, **characterized in that** the control frequency of the first switch means (41) changes within the time interval, from a predetermined lower frequency towards higher frequencies.

8. Ignition circuit arrangement according to claim 7, **characterized in that** the control frequency of the first switch means (41) increases to a predetermined higher frequency within the first time interval.

9. Ignition circuit arrangement according to one of the claims 3 to 8, **characterized in that** the control frequency of the first switch means continuously changes within the first time interval.

10. Ignition circuit arrangement according to one of the claims 1 to 9, **characterized in that** the time interval is determined by the period between the point of time of reaching the predetermined value and the point of time of reaching a predetermined limit value, particularly the peak voltage of the supply voltage.

11. Ignition circuit arrangement according to one of the claims 1 to 10, **characterized in that** the control frequency of the first switch means (40, 41) is between 290 kHz and 700 kHz or between 800 kHz and 5 MHz.

12. Process for igniting a gas discharge lamp, particularly a high-pressure gas discharge lamp which during its operation is supplied with electrical energy by an alternating current supply circuit, wherein at least one ignition pulse is generated by means of an ignition circuit arrangement (1) including an ignition transformer (20), **characterized in that** for aiding the ignition process, prior to the generation of the at least one ignition pulse a controllable energy storage (10) arranged in series with the gas discharge lamp (3) in said supply circuit is charged by connecting a charging current path, wherein said charging current path is interrupted prior to the generation of the first ignition pulse and at least a part of the energy stored in the controllable energy storage is superposed to the alternating current supply of the lamp during the ignition process.

13. Process according to claim 12, **characterized in that** within one half cycle of the supply voltage a single ignition pulse is generated.

14. Process according to claim 12 or 13, **characterized in that** after the generation of at least one ignition pulse within one half cycle of the supply voltage, at least one further ignition pulse is generated within a subsequent half cycle at the time of reaching a predetermined momentary value of the supply voltage.

15. Process according to claim 14, **characterized in that** the input voltage of a trigger circuit (2) for the generation of the at least one ignition pulse is set smaller in the subsequent half cycle compared to the input voltage for the generation of the at least one ignition pulse in the preceding half cycle.

16. Process according to claim 15, **characterized in that** after the termination of the charging process of the energy storage and prior to the generation of the at least one ignition pulse, a capacitance (C1; C3) disposed in parallel with said lamp is charged by opening the charging current path.

17. Process according to one of the claims 12 to 16, **characterized in that** the charging current and/or the momentary voltage of the energy storage (10) are detected.

18. Process according to claim 17, **characterized in that** the input voltage of an ignition trigger circuit (2) is controlled for the generation of the at least one ignition pulse in response to the detection of the charging current and/or the detection of the momentary voltage of the energy storage (10).

## Revendications

1. Arrangement d'un circuit d'allumage (1) pour allumer une lampe à décharge de gaz, notamment une lampe à décharge de gaz de haute pression (3), à laquelle est associé un circuit d'alimentation pour fournir à la lampe une tension d'alimentation en courant alternatif (UN), comprenant
- un transformateur d'allumage (20) connecté du côté primaire à un trigger (2) et du côté secondaire à la lampe, pour transmettre une impulsion d'allumage;
- une source d'énergie d'entrée (30, 31) pour le trigger d'allumage;
- un premier moyen interrupteur (40) dans le trigger; et
- un moyen de commande (50) pour la commande du premier moyen interrupteur, **caractérisé en ce que**, pour fournir une alimentation additionnelle à la lampe à décharge de gaz (3) durant l'allumage et pour aider le dernier, on a couplé, en série avec la lampe à décharge de gaz (3), un accumulateur d'énergie (10) commandable par le moyen de commande (50), notamment une source de tension commandable par le moyen de commande, en étant prévue une voie de courant de charge pour charger l'accumulateur d'énergie shuntant la lampe à décharge de gaz et comprenant un deuxième moyen interrupteur (60) commandé par le moyen de commande.

2. Arrangement d'un circuit d'allumage selon la revendication 1, **caractérisé par** un moyen (70) pour détecter la valeur instantanée de la tension d'alimentation, le premier moyen de commande étant commandé par le moyen de commande dans un intervalle de temps pour la coupure et la fermeture, dans au moins une alternance de tension d'alimentation après dépasser une valeur instantanée prédéterminée de la tension d'alimentation.

3. Arrangement d'un circuit d'allumage selon la revendication 2, **caractérisé en ce que** la fréquence de commande pour le premier moyen interrupteur change dans le premier intervalle de temps, la fréquence de commande étant supérieure à 290 KHz.

4. Arrangement d'un circuit d'allumage selon l'une des revendications 1 à 3, **caractérisé en ce que** l'accumulateur d'énergie est formé par une bobine d'inductance (10) dans le circuit d'alimentation.

5. Arrangement d'un circuit d'allumage selon l'une des revendications 1 à 4, **caractérisé en ce que** la source d'énergie d'entrée (30) est configurée comme une source de tension pour le trigger d'allumage est peut être réglée de manière variable par le moyen de commande (50).

6. Arrangement d'un circuit d'allumage selon l'une des revendications 1 à 5, **caractérisé par** des moyens (80) pour détecter le courant de charge et/ou la tension de charge de l'accumulateur d'énergie.

7. Arrangement d'un circuit d'allumage selon l'une des revendications 3 à 6, **caractérisé en ce que** la fréquence de commande du premier moyen interrupteur (41) change dans l'intervalle de temps à partir d'une fréquence basse prédéterminée vers des fréquences plus hautes.

8. Arrangement d'un circuit d'allumage selon la revendication 7, **caractérisée en ce que** la fréquence de commande du premier moyen interrupteur (41) s'accroît dans l'intervalle de temps jusqu'à une fréquence plus haute prédéterminée.

9. Arrangement d'un circuit d'allumage selon l'une des revendications 3 à 8, **caractérisé en ce que** la fréquence de commande du premier moyen interrupteur (41) change de manière continue dans l'intervalle de temps.

10. Arrangement d'un circuit d'allumage selon l'une des revendications 1 à 9, **caractérisé en ce que** l'intervalle de temps est défini par la période entre le moment de l'arrivé à la valeur prédéterminée et le moment de l'arrivé à une valeur limite prédéterminée, notamment la tension de crête de la tension d'alimentation.

11. Arrangement d'un circuit d'allumage selon l'une des revendications 1 à 10, **caractérisé en ce que** la fréquence de commande du premier moyen interrupteur (40, 41) est entre 290 kHz et 700 kHz ou entre 800 kHz et 5 MHz.

12. Procédé pour l'allumage d'une lampe à décharge de gaz, notamment d'une lampe à décharge de gaz de haute pression, alimentée en énergie électrique moyennant un circuit d'alimentation en courant alternatif, auquel procédé est générée au moins une impulsion d'allumage moyennant un arrangement de circuit d'allumage (1) comprenant un transformateur d'allumage (20), **caractérisé en ce que**, pour aider l'allumage avant la génération de ladite au moins une impulsion d'allumage, on charge un accumulateur d'énergie commandable (10) connecté en série avec la lampe à décharge de gaz (3) dans le circuit d'alimentation en connectant une voie de courant de charge, cette dernière étant coupée avant la génération de la première impulsion d'allumage, et au moins une partie de l'énergie accumulé dans l'accumulateur d'énergie commandable (10) étant superposée à l'alimentation en courant alternatif de lampe lors de l'allumage.

13. Procédé selon la revendication 12, **caractérisé en ce que** dans une alternance de tension d'alimentation est générée une seule impulsion d'allumage.

14. Procédé selon la revendication 12 ou 13, **caractérisé en ce que** après la génération de l'au moins une impulsion d'allumage dans une alternance de tension d'alimentation est générée au moins une autre impulsion d'allumage dans une alternance suivante lors de l'arrivé à une valeur instantanée prédéterminée de la tension d'alimentation.

15. Procédé selon la revendication 14, **caractérisé en ce que** la tension d'entrée d'un trigger (2) pour la génération de l'au moins une impulsion d'allumage est réglée, dans l'alternance suivante, à une valeur inférieure en regard de la tension d'entrée pour la génération de l'au moins une impulsion d'allumage dans l'alternance précédente.

16. Procédé selon la revendication 15, **caractérisé en ce que**, après l'achèvement de la mise en charge de l'accumulateur d'énergie et avant la génération de l'au moins une impulsion d'allumage, on charge une capacité (C1; C3) couplée en parallèle avec la lampe en ouvrant la voie de courant de charge.

17. Procédé selon l'une des revendications 12 à 16, **caractérisé en ce qu'**on détecte le courant de charge et/ou la tension instantanée de l'accumulateur d'énergie (10).

18. Procédé selon la revendication 18, **caractérisé en ce que** la tension d'entrée d'un trigger (2) est commandée pour la génération de l'au moins une impulsion d'allumage en répondant à la détection du courant de charge et/ou à la détection de la tension instantanée de l'accumulateur d'énergie (10).
